# EUROPÄISCHE PATENTSCHRIFT

(11) **EP 1 452 410 B1**
(45) Veröffentlichungstag und Bekanntmachung des Hinweises auf die Patenterteilung: **07.06.2006**
(21) Anmeldenummer: 04003279.9
(22) Anmeldetag: 13.02.2004
(51) Int. Cl.: B60R 22/46

(54) **Gurtaufroller mit Straffvorrichtung**
Belt retractor with pretensioner
Enrouleur de ceinture avec prétensionneur

(30) Priorität: 28.02.2003 DE 20303302 U
(43) Veröffentlichungstag der Anmeldung: 01.09.2004
(73) Patentinhaber: TRW Automotive GmbH, 73553 Alfdorf (DE)
(72) Erfinder: Wier, Franz, 73571 Göggingen (DE)
(74) Vertreter: Sties, Jochen

(56) Entgegenhaltungen:
- EP-A- 0 724 987
- DE-A- 19 837 927
- DE-A- 19 927 270
- DE-U- 20 113 773

## Beschreibung

Die Erfindung betrifft einen Gurtaufroller mit einer Straffvorrichtung, die einen Zylinder und einen in dem Zylinder verschiebbar geführten Kolben aufweist, wobei der Kolben mit einem Zahnstangenabschnitt versehen ist, in das ein Ritzel eingreifen kann, um den Gurtaufroller anzutreiben.

Ein derartiger Gurtaufroller ist beispielsweise aus der DE 44 15 103 A1 bekannt. Bei diesem Gurtaufroller ist die Zahnstange in die Außenwand des Kolbens integriert, wodurch die Straffvorrichtung sehr klein gebaut werden kann. Die Zahnstange steht bereits vor Auslösung der Straffvorrichtung und über den gesamten Strafferweg mit dem zugehörigen Ritzel im Eingriff. Daher ist eine Kupplung erforderlich, die das Ritzel für den Straffvorgang mit dem Aufroller verbindet und danach wieder trennt, damit Gurtband von der Gurtspule abgezogen werden kann. In der DE 201 13 773 U1 und in der gattungsgemäßen DE 199 27 270 A1 ist bei einem Gurtaufroller der Kolben mit einem Entlüftungsventil versehen, damit der Kolben nach dem Straffvorgang wieder in Richtung seiner Ausgangsstellung verschoben werden kann. Dies kann beispielsweise für die Funktion einer Gurtkraftbegrenzung notwendig sein.

Die Erfindung schafft einen kostengünstigen und einfachen Gurtaufroller mit Straffvorrichtung.

Zu diesem Zweck ist bei einem Gurtaufroller der eingangs genannten Art vorgesehen, daß der Zahnstangenabschnitt wenigstens ein Segment aufweist, das lösbar am Kolben befestigt ist iso daß es nach dem Straffvorgang vom Kolben gelöst werden kann. Damit kann nach der Auslösung des Gurtstraffers zumindest ein Teilabschnitt des Zahnstangenabschnitts vom Kolben getrennt werden, so daß dieser außer Eingriff des Ritzels gerät. Die Funktion des Gurtaufrollers ist dann nicht mehr vom Kolben gehemmt. Dies ermöglicht einen Freilauf des Gurtaufrollers, ohne daß eine Kupplung zwischen Ritzel und Gurtspule oder ein Entlüftungsventil im Kolben oder Zylinder erforderlich ist.

Gemäß einer bevorzugten Ausführungsform weist die Zahnstange mehrere Segmente auf, die separat vom Kolben lösbar sind. Damit kann eine Freilauffunktion mit dem Gurtaufroller auch dann erreicht werden, wenn der Kolben den Straffweg nur teilweise durchlaufen hat, beispielsweise weil eine Kraftbegrenzung eingesetzt hat.

Weitere vorteilhafte Ausführungsformen ergeben sich aus den Unteransprüchen.

Die Erfindung wird nachfolgend anhand bevorzugter Ausführungsformen ausführlich beschrieben. Dabei wird Bezug genommen auf die beigefügten Zeichnungen, in welchen zeigt:
- Figur 1 einen Querschnitt durch einen Gurtaufroller gemäß einer ersten Ausführungsform der Erfindung in einem ersten Zustand;
- Figur 2 einen Längsschnitt durch den Gurtaufroller aus Figur 1 entlang der Linie II-II in Figur 1;
- Figur 3 einen Längsschnitt durch den Gurtaufroller aus Figur 1 in einem zweiten Zustand;
- Figur 4 einen Längsschnitt durch den Gurtaufroller aus Figur 1 in einem dritten Zustand;
- Figur 5 einen Längsschnitt durch den Gurtaufroller aus Figur 1 in einem vierten Zustand;
- Figur 6 einen Längsschnitt durch eine alternative Bauform eines Kolbens für einen erfindungsgemäßen Gurtaufroller;
- Figur 7 einen Längsschnitt durch einen Gurtaufroller gemäß einer zweiten Ausführungsform der Erfindung; und
- Figur 8 einen Längsschnitt durch eine alternative Bauform eines Kolbens für einen erfindungsgemäßen Gurtaufroller.

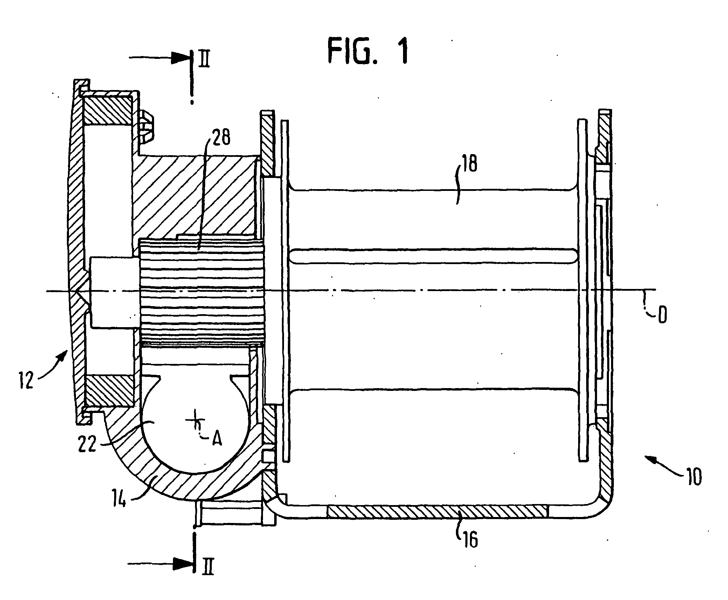

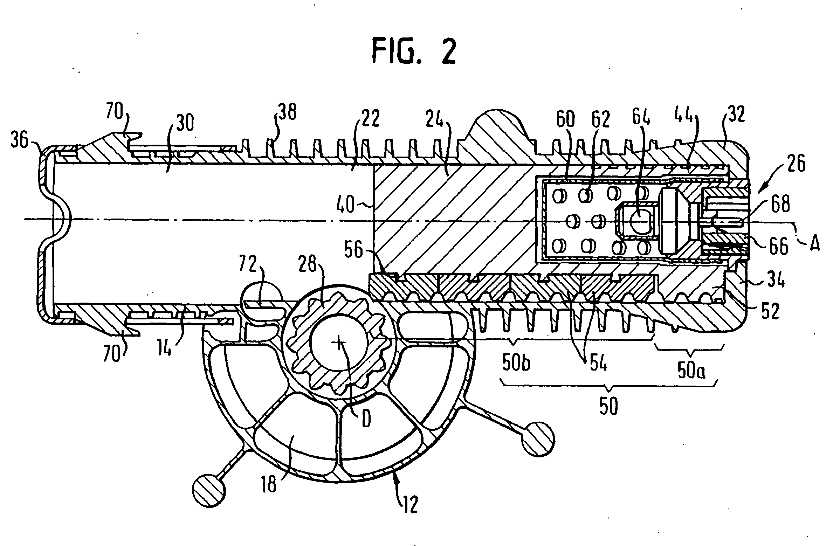

In den Figuren 1 und 2 ist ein Gurtaufroller 10 mit einer Straffvorrichtung 12 zu sehen. Der Gurtaufroller 10 besitzt einen U-förmigen Rahmen 16, zwischen dessen Schenkeln eine Gurtspule 18 um eine Achse D drehbar gelagert ist. Die Gurtspule 18 ist mit einem Ritzel 28 ausgestattet, das durch einen der Schenkel des Rahmens in den Bereich der Staffervorrichtung 12 ragt.

Die Straffvorrichtung 12 besteht in der beschriebenen Ausführungsform aus einem Gehäuse 14, in dem ein Zylinder 22 mit kreisrundem Querschnitt ausgebildet ist, einem darin verschiebbar geführten Kolben 24 und einem Gasgenerator 26 für die Erzeugung von Druckgas zum Antrieb des Kolbens 24. Der Zylinder 22 erstreckt sich entlang einer Längsachse A rechtwinklig zur Drehachse D der Gurtspule 18 von einem vorderen Ende 30 (in den Figuren links) zu einem hinteren Ende 32, an dem der Zylinder 22 eine Stirnwand 34 besitzt. Am vorderen Ende 30 ist der Zylinder 22 mit einer verschiebbaren Auffangkappe 36 verschlossen, die eine Abbremsvorrichtung für den Kolben 24 bildet. Da der Gasgenerator 26 am hinteren Ende 32 sitzt, ist die Wandstärke des Zylinders 22 in diesem Bereich zum Schutz gegen Abbrand dicker ausgeführt als im weiteren Verlauf des Zylinders 22, wo die Zylinderwand relativ dünn, jedoch durch Längs- und Querrippen 38 von vorzugsweise 0,5 bis 1,5 mm Dicke verstärkt ist, um die notwendige Stabilität des Zylinders 22 zu gewährleisten.

Der Kolben 24 besteht aus einem im wesentlichen zylindrischer Körper, mit einem Kopfende 40 und einem Fußende 42, das zum hinteren Ende 32 des Zylinders 22 weist. Der Querschnitt des Kolbens 24 ist an den Querschnitt des Zylinders 22 angepaßt, sodaß der Kolben 24 dicht im Zylinder 22 gleiten kann. Am Fußende 42 hat der Kolben 24 einen Rohrabschnitt 44, der einen Treibraum 46 umgibt. In diesen Treibraum 46 ragt der Generator 26, wenn sich der Kolben 24 in seiner Ausgangsstellung, am hinteren Ende 32 des Zylinders 22 befindet.

Ein Zahnstangenabschnitt 50 ist im Kolben 24 ausgebildet, und zwar in dem Bereich, in welchem die Zähne des Ritzels 28 in den Zylinder 22 ragen. Der Zahnstangenabschnitt 50 ist segmentiert, wobei ein erster Teilabschnitt 50a von einem ersten Segment 52 gebildet ist. Das erste Segment 52 ist am Fußende 42 des Kolbens 24 einstückig mit dem Kolben 24 ausgebildet ist. Ein zweiter Teilabschnitt 50b besteht vorzugsweise aus mehreren Segmenten 54, die lösbar am Kolben 24 befestigt sind. Für eine gute Kraftübertragung ist die Kolbenverzahnung vorzugsweise so ausgebildet, daß das Ritzel 28 mindestens über 11 mm, vorzugsweise über 14 mm Breite am Teilkreis in die Verzahnung greift. Der Zahnstangenabschnitt 50 erstreckt sich vorzugsweise über die gesamte Länge des Kolbens 24, um einen langen effektiven Straffweg zu ermöglichen, indem der Zahnstangenabschnitt 50 die Ritzelverzahnung vollständig verläßt. In den letzten Zahn des Zahnstangenabschnitts 50 kann ein Dichtring integriert sein, um den Kolben 24 gegen die Zylinderwand abzudichten.

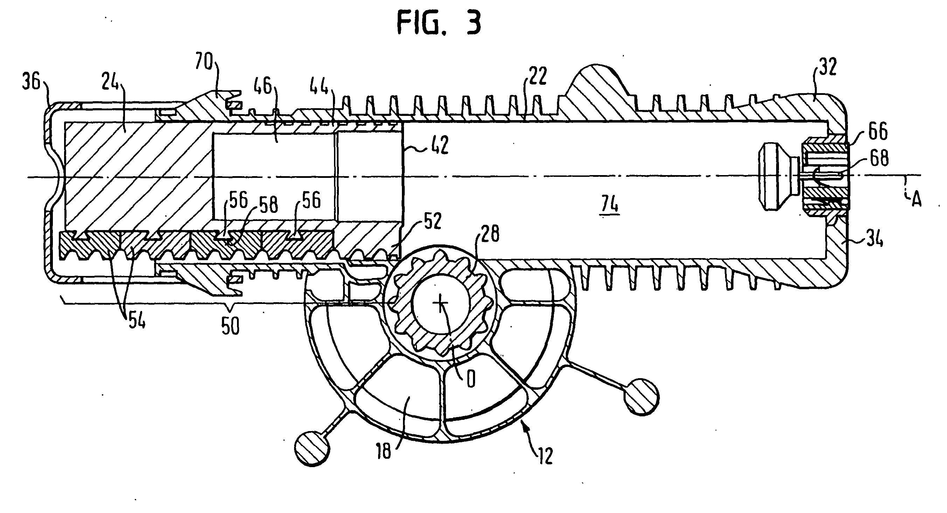

Diese lösbare Befestigung ist vorteilhaft dadurch realisiert, daß, wie in den Figuren 1 und 3 dargestellt ist, Scherzapfen 56 am Kolben 24 ausgebildet sind, die in Ausnehmungen 58 in den Segmenten 54 greifen. Der Vorteil dieser lösbaren Befestigung ergibt sich aus der weiter unten folgenden Beschreibung der Funktionsweise der Straffvorrichtung 12.

Der Gasgenerator 26 weist eine Hülse 60 auf, welche einen Treibsatz 62 mit einem Zünder 64 beherbergt und mit einem Sockel 66 verschlossen ist. Der Gasgenerator 26 sitzt mit seinem Sockel 66 in einer Öffnung am hinteren Ende 32 des Zylinders 22, wobei in dem Sockel 66 eine elektrische Steckverbindung 68 zum Anschluß des Gasgenerators 26 an eine nicht dargestellte Auslösevorrichtung vorgesehen ist.

Im Ausgangszustand, wie er in Figur 2 gezeigt ist, befindet sich der Kolben 24 am hinteren Ende 32 des Zylinders, mit seinem Fußende 42 an der Stirnwand 34 anstoßend. Damit umgibt der Rohrabschnitt 44 vorteilhaft den Gasgenerator 26, woraus eine geringere Baulänge des Zylinders 22 resultiert. Wie in den Figuren zu sehen ist, steht der Kolben 24 im Ausgangszustand so, daß der Zahnstangenabschnitt 50 noch nicht in Eingriff des Ritzels steht. Daher kann sich im Ausgangszustand die Gurtspule 18 frei drehen.

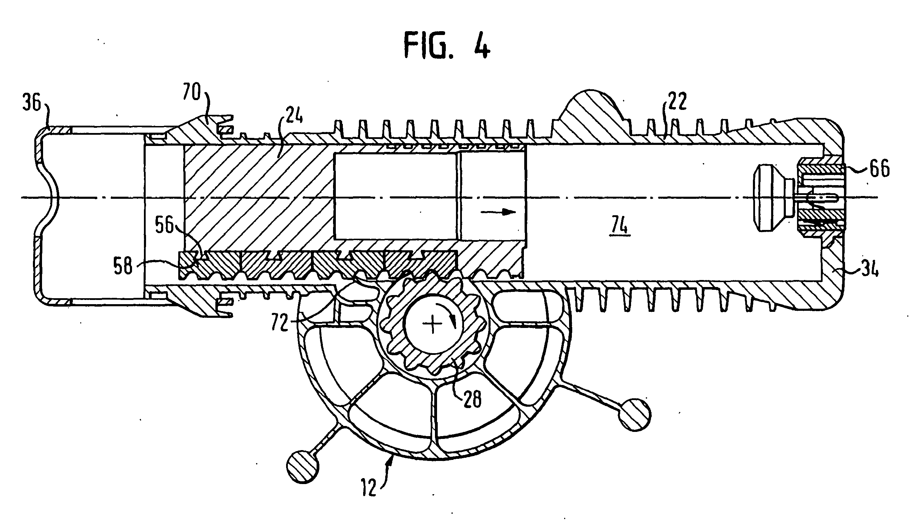

Zur Auslösung der Straffvorrichtung 12 wird der Gasgenerator 26 gezündet. Das entstehende Druckgas treibt den Kolben 24 zum vorderen Ende des Zylinders 22, wobei das Ritzel 28 vom Zahnstangenabschnitt 50 mitgenommen und damit die Gurtspule 18 angetrieben wird, um eine eventuell vorhandene Gurtlose zu beseitigen. Kann der Kolben 24 bis zum vorderen Ende des Zylinders 22 vordringen, wird er von der Abbremsvorrichtung zum Stillstand gebracht. Dazu kann die Auffangkappe 36 unter Kraftaufwand, der durch Reibung an der Zylinderaußenwand und/oder durch plastische Verformung hervorgerufen wird, soweit vom Zylinder 22 abgezogen werden, bis an der Zylinderaußenwand ausgebildete Fanghaken 70 sie arretieren (Fig. 4). Auf diese Weise kann die Auffangkappe 36 den Kolben 24 unter Umwandlung seiner kinetische Energie abbremsen. Die teleskopartige Verschiebung der Auffangkappe 36 gestattet vorteilhaft einen langen Bremsweg und damit eine gute Bremsfunktion bei verringerter Baulänge der Straffvorrichtung.

Wie in Figur 3 zu sehen ist, hat der Zahnstangenabschnitt 50 dank der Verschiebung der Hülse 36 den Eingriffsbereich des Ritzels 28 verlassen, so daß sich dieses wieder frei drehen kann. Dadurch kann der Drehimpuls der Gurtspule 18 ausgenutzt werden, indem sich diese infolge ihres Massenträgheitsmoments weiter dreht und Gurtband einziehen kann. Dies ist besonders bei einer großen Gurtlose vorteilhaft, für die der Straffweg allein nicht ausreichen würde. Ein weiterer Vorteil des Freilaufs des Ritzels 28 ergibt sich beispielsweise, wenn der Gurtaufroller mit eine Gurtkraftbegrenzung ausgestattet ist, die dadurch realisiert sein kann, daß zwischen der Gurtspule 18 und einer Sperrvorrichtung zur fahrzeug- oder gurtsensitiven Sperrung der Gurtspule ein Torsionsstab (beides nicht dargestellt) vorgesehen ist. Da die Gurtspule 18 gegenüber dem Gurtstraffer mit einem Freilauf versehen ist, kann trotz Ansprechens der Sperrvorrichtung 20 eine gewisse Länge Gurtband unter Torsion des Torsionsstabes abgezogen werden, was zur Funktion der Gurtkraftbegrenzung unbedingt erforderlich ist. Weiterhin bedeutet die Freigabe des Ritzels 28 vorteilhafterweise, daß der Gurtaufroller 10 nach vollendetem Straffvorgang nur noch von der Sperrvorrichtung 20 gesperrt werden kann, so daß sich ein Fahrzeuginsasse beispielsweise nach einem Rückhaltevorgang, wenn die Sperrvorrichtung 20 die Gurtspule 18 wieder freigibt, durch Abziehen von Gurtband selbst befreien kann.

Durchfährt der Kolben 24 jedoch nicht den gesamten Straffweg, beispielsweise weil nur eine geringe Gurtlose vorhanden war, so bleibt der Zahnstangenabschnitt 50 im Eingriff des Ritzels 28, wie es in Figur 4 dargestellt ist. Wird nun versucht, Gurtband abzuziehen, so muß über das Ritzel 28 der Kolben 24 zurückgeschoben werden. Dies ist jedoch nur bis zu einem gewissen Maß möglich, da der Zylinderraum 74 zwischen dem Fußende 42 des Kolbens 24 und der Stirnwand 34 des Zylinders 22 mit Druckgas gefüllt ist und vorzugsweise dicht abgeschlossen sein sollte.

Bisher wurde dieses Problem dadurch gelöst, daß im Kolben oder im Zylinder ein Entlastungsventil vorgesehen wurde, durch welches der Druck nach einer gewissen Zeit entweichen konnte. In der vorliegenden Erfindung ist dies jedoch nicht erforderlich, da die Segmente 54 lösbar am Kolben befestigt sind. Ein elastischer Widerhaken 72 an der Zylinderinnenwand verhindert, daß bereits außerhalb des Eingriffs des Ritzels 28 befindlichen Segmente 54 bei der Rückwärtsbewegung des Kolbens 24 von diesem wieder mitgenommen werden. Diese Segmente werden vielmehr von dem Widerhaken 72 festgehalten. Die Scherzapfen 56 sind vorzugsweise so bemessen, daß sie durch die beim Abziehen des Gurtbandes auftretenden Kräfte, beispielsweise infolge des Einsetzens der Gurtkraftbegrenzung, abgeschert werden können. Andererseits sollen die Scherzapfen ausreichend stabil sein, daß die Segmente 54 die Reibung an der Zylinderwand, z.B. bei der Montage des Kolbens 24, überwinden können. Die Segmente 54 sollen also durch die von der Gurtspule 18 übertragenen Kräfte vom Kolben 24 lösbar sein.

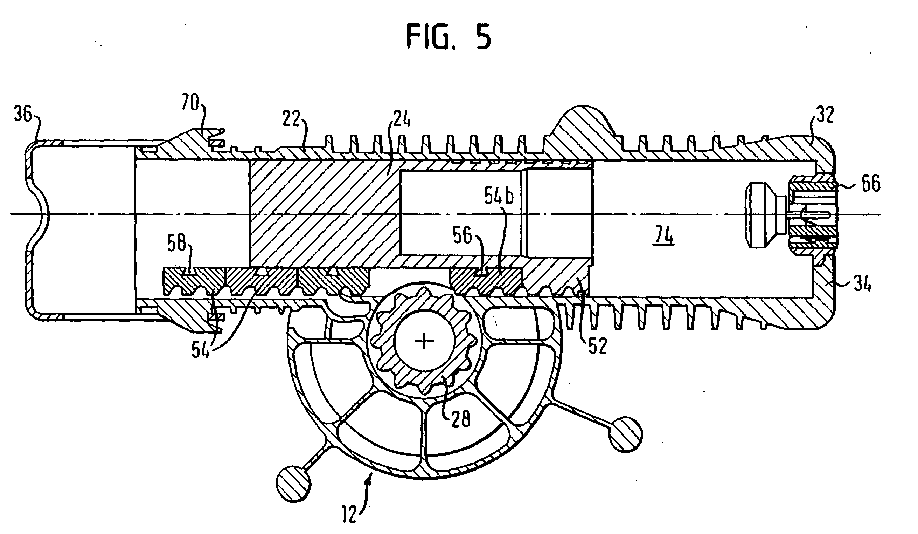

Wie in Figur 5 zu sehen ist, handelt es sich dabei um drei Segmente 54, die sich links des Ritzels 28 befinden, während ein Segment 54b noch im Eingriff steht. Bei der Rückwärtsbewegung des Kolbens 24 wird dann die Verbindung der Segmente 54 zum Kolben 24 gelöst, indem die Scherzapfen 56 abgeschert werden. Der Kolben 24 muß daher von dem Ritzel 28 nur um wenige Zähne zurückbewegt werden, maximal um so viele, wie sich an dem Segment 54b befinden, welches zum Zeitpunkt der maximalen Vorwärtsbewegung noch im Ritzel 28 in Eingriff stand. Die durch diese geringfügige Rückwärtsbewegung verursachte Druckerhöhung im vom Kolben 24 abgeschlossenen Zylinderraum 74 ist vernachlässigbar, so daß dem Abrollen des Gurtbandes kein nennenswerter Widerstand entgegengesetzt wird.

Das Gehäuse 14 der Straffvorrichtung 12, insbesondere der Zylinder 22 und/oder der Kolben 24, können in vorteilhafter Weise kostengünstig aus Druckguß oder Spritzguß hergestellt sein. Vorteilhaft können auch Gurtspule 18 und Ritzel 28 vorzugsweise einstückig aus Druckguß hergestellt sein. Ermöglicht wird dies durch einen Kolben 24 mit einem im Vergleich zum Stand der Technik relativ großen Querschnitt, der vorzugsweise doppelt so groß sein kann. Bei Verwendung eines Kolbens 24 mit großem Querschnitt kann dieser mit geringerem Gasdruck unter 400 bar, vorzugsweise unter 300 bar, angetrieben werden, so daß die Festigkeit von Druckguß bzw. Spritzguß ausreichend ist. Darüber hinaus hat eine derartige Gestaltung den Vorteil, daß Zünder bzw. Generatoren aus Kunststoff eingesetzt werden können, die ebenfalls einen deutlichen Kostenvorteil bringen. Um dennoch eine ausreichende Festigkeit für die Kraftübertragung vom Kolben 24 zum Ritzel 28 zu gewährleisten ist die Verzahnung von Ritzel und Kolben breiter als 11 mm, vorzugsweise breiter als 14 mm ausgestaltet. Außerdem können die lösbaren Segmente 54 des Zahnstangenabschnitts 50 und das Ritzel 28 vorzugsweise als Profilteile aus einem festeren Material hergestellt sein.

Das Ritzel 28 kann vorteilhaft im Gehäuse 14 beidseitig gelagert sein, damit ein vom Kolben 24 ausgeübtes Biegemoment auf die Achse D vom Gehäuse 14 aufgenommen wird. Das Ritzel 28 ist vorteilhafterweise mit wenigstens sieben Zähnen versehen, damit beim Einlauf des Zahnstangenabschnitts 50 eine Blockade des Kolbens 24 durch eine ungünstige Winkelstellung des Ritzels 28, bei der Zahn auf Zahn trifft, vermieden wird. Außerdem greift der Zahnstangenabschnitt 50 früher in das Ritzel 28, sodaß der Verschubweg des Kolbens besser ausgenutzt werden kann.

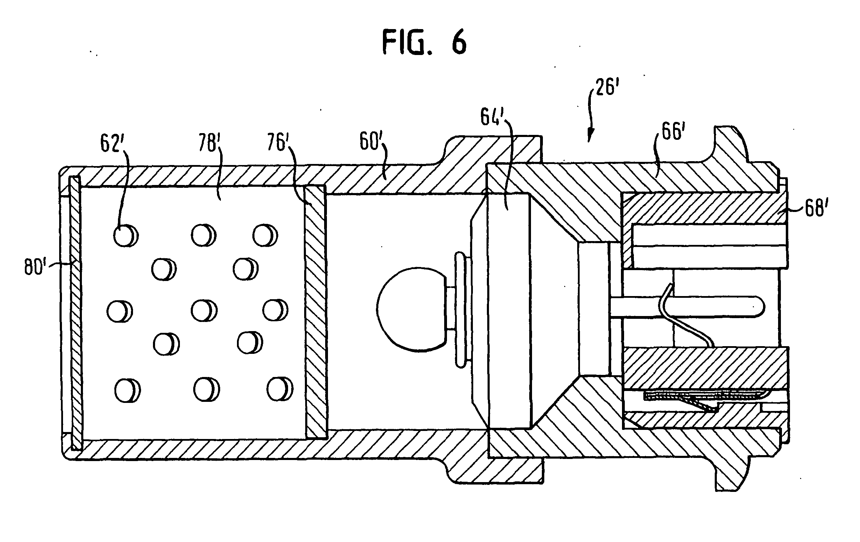

In Figur 6 ist eine alternative Bauform eines Gasgenerators 26' für einen erfindungsgemäßen Gurtaufroller zu sehen. Bei dieser Bauform ist die Hülse 60' mit einer Trennwand 76' versehen. Die Hülse 60' hat daher eine abgeschlossene Treibsatzkammer 78' zur Aufnahme des Treibsatzes 62'. Die Hülse 60' kann damit schon vor der Montage des Gasgenerators 26' mit dem Treibsatz 62' befüllt und dennoch sicher gelagert werden, wodurch beispielsweise der Treibsatz 62' gegen Feuchtigkeit geschützt ist. Den Boden der Hülse 60' bildet eine Berstscheibe 80', die eine Überdrucksicherung für den Gasgenerator 26' darstellt. Die Hülse 60' kann vorteilhaft auch einstückig mit dem Sockel 66' und/oder dem Steckverbindergehäuse 68' ausgebildet sein.

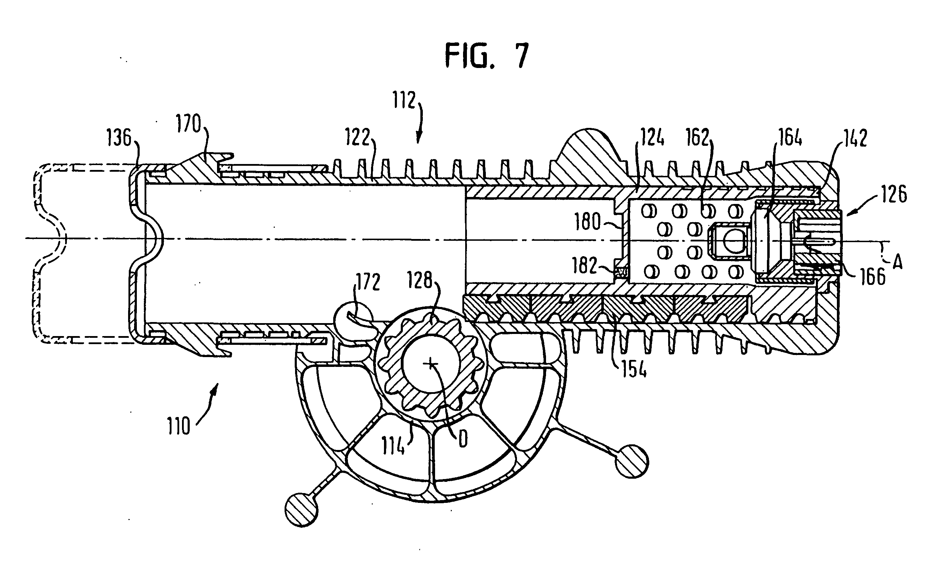

In Figur 7 ist eine zweite Ausführungsform eines Gurtaufrollers 110 dargestellt, bei der für bereits bekannte Bauteile um 100 erhöhte Bezugszeichen verwendet wurden. Diese Ausführungsform unterscheidet sich von der vorher beschriebenen dadurch, daß sie einen Kolben 124 mit integriertem Gasgenerator 126 aufweist. Dabei sitzt der Sockel 166, welcher den Zünder 164 trägt, in der Treibkammer am Fußende 142 des Kolbens, welche auch den Treibsatz 162 beherbergt. Somit kann auf eine Hülse für den Gasgenerator 126 verzichtet werden. Eine Überdrucksicherung für den Gasgenerator 126 ist ebenfalls vorgesehen, in Form eines Schmelzmetalleinsatzes 182 und einer Berstscheibe 180, die den Boden der Hülse 160 bildet. Bei der Zündung des Gasgenerators 126 bleibt der Sockel 166 im hinteren Ende 130 des Zylinders 122 zurück.

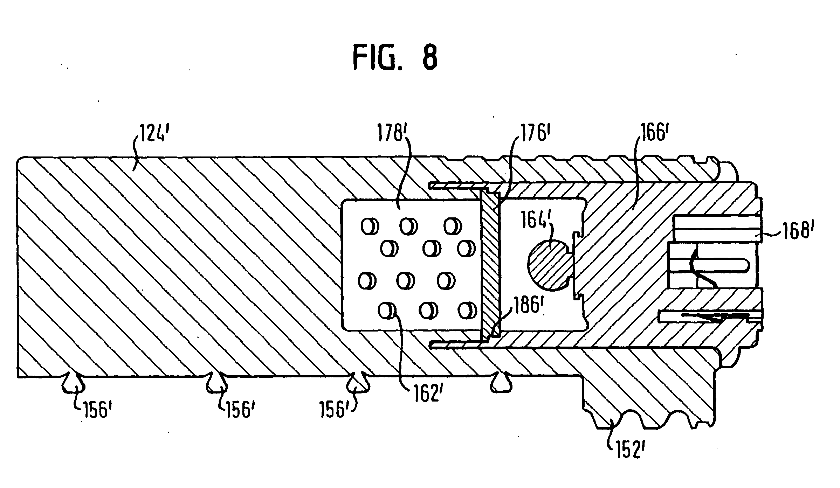

Eine alternative Bauform eines derartigen Kolbens 124' ist in Figur 8 gezeigt. Dort ist wiederum die Treibsatzkammer 178' vom Zünder 164' durch eine Trennwand 176' getrennt. Der Sockel 166' ist in den Kolben 124' eingeschoben und bildet an seinem, der Steckverbindung 168' abgewandten Ende eine Hülse mit einem gestuften Absatz 186' der die Trennwand 176' hält.

Bei den beschriebenen Ausführungsformen sind Zylinder und Kolben mit kreisrundem Querschnitt vorgesehen. Die Erfindung ist jedoch nicht auf derartige Querschnitte beschränkt. Es können auch beliebige runde oder eckige Querschnitte vorgesehen werden, die beispielsweise vorteilhaft eine Verdrehsicherung des Kolbens um seine Längsachse bieten können. Zylinder und Kolben müssen nicht gerade sein, sondern können auch einen Kreisbogen bilden, womit eine Verkürzung der Baulänge der Straffvorrichtung erreicht werden kann.

Alternativ oder zusätzlich zur Rückhaltung der Zahnstangensegmente 54 mittels des Widerhakens 72 kann auch am Ende des Zylinders 22 ein Auffangbehälter vorgesehen sein, in welchem Zahnstangensegmente aufgefangen werden, sobald sie vom Kolben 24 abgelöst sind.

## Patentansprüche

1. Gurtaufroller (10; 110) mit einer Straffvorrichtung (12; 112), die einen Zylinder (22; 22'; 122; 122') und einen in dem Zylinder verschiebbar geführten Kolben (24; 24'; 124; 124') aufweist, wobei der Kolben mit einem Zahnstangenabschnitt (50; 50'; 150; 150') versehen ist, in das ein Ritzel (28; 128) eingreifen kann, um den Gurtaufroller anzutreiben, **dadurch gekennzeichnet, daß** der Zahnstangenabschnitt wenigstens ein Segment (54; 54'; 154; 154') aufweist, das lösbar am Kolben befestigt ist, so daß es nach dem Straffvorgang vom Kolben gelöst werden kann.

2. Gurtaufroller nach Anspruch 1, **dadurch gekennzeichnet, daß** der Kolben (24; 24'; 124; 124') aus Druckguß hergestellt ist.

3. Gurtaufroller nach Anspruch 1, **dadurch gekennzeichnet, daß** das lösbare Segment (54; 54'; 154; 154') aus einem anderen Material besteht als der restliche Kolben (24; 24'; 124; 124').

4. Gurtaufroller nach Anspruch 1 oder 3, **dadurch gekennzeichnet, daß** das lösbare Segment (54; 54'; 154; 154') als Profilteil hergestellt ist.

5. Gurtaufroller nach einem der vorhergehenden Ansprüche, **dadurch gekennzeichnet, daß** der Zahnstangenabschnitt (50; 50'; 150; 150') mehrere lösbare Segmente (54; 54'; 154; 154') aufweist.

6. Gurtaufroller nach einem der vorhergehenden Ansprüche, **dadurch gekennzeichnet, daß** am Kolben (24; 24'; 124; 124') wenigstens ein Scherzapfen (56; 56'; 156; 156') vorgesehen ist, der in eine Ausnehmung (58; 58'; 158; 158') in dem lösbaren Segment (54; 54'; 154; 154') greift.

7. Gurtaufroller nach einem der vorhergehenden Ansprüche, **dadurch gekennzeichnet, daß** im Zylinder (22; 22'; 122; 122') ein Wiederhaken (72; 72'; 172; 172') vorgesehen ist, der an dem lösbaren Segment (54; 54'; 154; 154') angreifen kann.

8. Gurtaufroller nach einem der vorhergehenden Ansprüche, **dadurch gekennzeichnet, daß** das Ritzel (28; 128) aus Druckguß hergestellt ist.

9. Gurtaufroller nach einem der vorhergehenden Ansprüche, **dadurch gekennzeichnet, daß** das Ritzel (28; 128) einstückig mit einer Gurtspule (18; 118) hergestellt ist.

10. Gurtaufroller nach einem der vorhergehenden Ansprüche, **dadurch gekennzeichnet, daß** das Ritzel (28; 128) mehr als sieben Zähne aufweist.

11. Gurtaufroller nach einem der vorhergehenden Ansprüche, **dadurch gekennzeichnet, daß** die Straffvorrichtung ein Gehäuse (14; 114) aufweist, wobei der Zylinder (22; 122) einstückig mit dem Gehäuse (14; 114) aus Druckguß hergestellt ist.

## Claims

1. A belt retractor (10; 110) comprising a tensioning device (12; 112) having a cylinder (22; 22'; 122; 122') and a piston (24; 24'; 124; 124') displaceably guided in the cylinder, the piston being provided with a tooth rack section (50; 50'; 150; 150') into which a pinion (28; 128) can engage to drive the belt retractor, **characterized in that** the tooth rack section includes at least one segment (54; 54'; 154; 154') which is detachably attached to the piston, so that it can be detached from the piston after the tensioning process.

2. The belt retractor according to claim 1, **characterized in that** the piston (24; 24'; 124; 124') is manufactured by diecasting.

3. The belt retractor according to claim 1, **characterized in that** the detachable segment (54; 54'; 154; 154') consists of a different material than the remaining piston (24; 24'; 124; 124').

4. The belt retractor according to claim 1 or 3, **characterized in that** the detachable segment (54; 54'; 154; 154') is manufactured as a profiled part.

5. The belt retractor according to any of the preceding claims, **characterized in that** the tooth rack section (50; 50'; 150; 150') has several detachable segments (54; 54'; 154; 154').

6. The belt retractor according to any of the preceding claims, **characterized in that** provided on the piston (24; 24'; 124; 124') is at least one shearing pin (56; 56'; 156; 156') which reaches into a recess (58; 58'; 158; 158') in the detachable segment (54; 54'; 154; 154').

7. The belt retractor according to any of the preceding claims, **characterized in that** a barb (72; 72'; 172; 172') is provided in the cylinder (22; 22'; 122; 122'), which barb (72; 72'; 172; 172') can engage the detachable segment (54; 54'; 154; 154').

8. The belt retractor according to any of the preceding claims, **characterized in that** the pinion (28; 128) is manufactured by diecasting.

9. The belt retractor according to any of the preceding claims, **characterized in that** the pinion (28; 128) is manufactured in one piece with a belt reel (18; 118).

10. The belt retractor according to any of the preceding claims, **characterized in that** the pinion (28; 128) has more than seven teeth.

11. The belt retractor according to any of the preceding claims, **characterized in that** the tensioning device has a housing (14; 114), the cylinder (22; 122) being manufactured by diecasting in one piece with the housing (14; 114).

## Revendications

1. Enrouleur de ceinture (10 ; 110) comportant un dispositif de prétensionnement (12 ; 112) qui présente un cylindre (22 ; 22' ; 122 ; 122') et un piston (24 ; 24' ; 124 ; 124') guidé de manière déplaçable dans le cylindre, le piston étant pourvu d'un tronçon de crémaillère (50 ; 50' ; 150 ; 150') dans lequel peut s'engager un pignon (28 ; 128) pour entraîner l'enrouleur de ceinture, **caractérisé en ce que** le tronçon de crémaillère présente au moins un segment (54 ; 54' ; 154 ; 154') qui est fixé de manière détachable sur le piston, de sorte qu'il peut être détaché du piston après une opération de prétensionnement.

2. Enrouleur de ceinture selon la revendication 1, **caractérisé en ce que** le piston (24 ; 24' ; 124 ; 124') est fabriqué par moulage sous pression.

3. Enrouleur de ceinture selon la revendication 1, **caractérisé en ce que** le segment détachable (54 ; 54' ; 154 ; 154') est en un autre matériau que le reste du piston (24 ; 24' ; 124 ; 124').

4. Enrouleur de ceinture selon la revendication 1 ou 3, **caractérisé en ce que** segment détachable (54 ; 54' ; 154 ; 154') est réalisé sous forme de pièce profilée.

5. Enrouleur de ceinture selon l'une des revendications précédentes, **caractérisé en ce que** le tronçon de crémaillère (50 ; 50' ; 150 ; 150') présente plusieurs segments détachables (54 ; 54' ; 154 ; 154').

6. Enrouleur de ceinture selon l'une des revendications précédentes, **caractérisé en ce qu'**il est prévu sur le piston (24 ; 24' ; 124 ; 124') au moins un tenon à enfourchement (56 ; 56' ; 156 ; 156') qui s'engage dans un évidement (58 ; 58' ; 158 ; 158') dans le segment détachable (54 ; 54' ; 154 ; 154').

7. Enrouleur de ceinture selon l'une des revendications précédentes, **caractérisé en ce qu'**il est prévu dans le cylindre (22 ; 22' ; 122 ; 122') un ardillon (72 ; 72' ; 172 ; 172') qui peut attaquer le segment détachable (54 ; 54' ; 154 ; 154').

8. Enrouleur de ceinture selon l'une des revendications précédentes, **caractérisé en ce que** le pignon (28 ; 128) est fabriqué par moulage sous pression.

9. Enrouleur de ceinture selon l'une des revendications précédentes, **caractérisé en ce que** le pignon (28 ; 128) est fabriqué d'un seul tenant avec une bobine de ceinture (18 ; 118).

10. Enrouleur de ceinture selon l'une des revendications précédentes, **caractérisé en ce que** le pignon (28 ; 128) présente plus de sept dents.

11. Enrouleur de ceinture selon l'une des revendications précédentes, **caractérisé en ce que** le dispositif de prétensionnement présente un boîtier (14 ; 114), le cylindrique (22 ; 122) étant fabriqué d'un seul tenant avec le boîtier (14 ; 114) par moulage sous pression.
